# EUROPÄISCHE PATENTANMELDUNG

(11) **EP 1 972 474 A1**
(43) Veröffentlichungstag der Anmeldung: **24.09.2008**
(21) Anmeldenummer: 08290263.6
(22) Anmeldetag: 20.03.2008
(51) Int. Cl.: B60H 1/22

(54) **Vorrichtung zum Heizen insbesondere einer Fahrgastzelle eins Kraftfahrzeuges**

(30) Priorität: 21.03.2007 DE 102007014094
(71) Anmelder: Behr France Rouffach SAS, 68250 Rouffach (FR)
(72) Erfinder: Denny, Geoffrey, 68107 Rixheim (FR); Dott, Michael, 68570 Soulzmatt (FR)
(74) Vertreter: Grauel, Andreas

(57) **Zusammenfassung**

Die Erfindung betrifft eine Vorrichtung zum Heizen insbesondere einer Fahrgastzelle eines Kraftfahrzeuges mit einer elektrischen Heizeinrichtung und mit einem Gehäuse, bei welcher das Gehäuse eine Durchführungsöffnung aufweist, durch welche ein elektrisches Anschlusskabel von einer Gehäuseaußenseite in eine Gehäuseinnenseite hinein geführt werden kann, wobei sich die Heizvorrichtung dadurch auszeichnet, dass die Durchführungsöffnung Mittel zum Reduzieren des Durchmessers der Durchführungsöffnung umfasst, wodurch die der Heizvorrichtung zum Aufheizen zugeführte Luft effektiver, insbesondere auch dauerhaft, genutzt werden kann.

## Beschreibung

Die Erfindung betrifft eine Vorrichtung zum Heizen insbesondere einer Fahrgastzelle eines Kraftfahrzeuges mit einer elektrischen Heizeinrichtung und mit einem Gehäuse, bei welcher das Gehäuse eine Durchführungsöffnung aufweist, durch welche ein elektrisches Anschlusskabel für die elektrischen Heizeinrichtung von einer Gehäuseaußenseite in eine Gehäuseinnenseite hinein geführt werden kann.

Gattungsgemäße Heizvorrichtungen zum Heizen insbesondere einer Fahrgastzelle eines Kraftfahrzeuges sind aus dem Stand der Technik vielfältig bekannt. Hierbei können derartige Heizvorrichtungen direkt in Luftzufuhrkanäle der Fahrgastzelle angeordnet sein, so dass sie mit der Heizleistung ihrer elektrischen Heizeinrichtungen, die etwa PTC-Elemente umfassen können, eine Fahrgastzellenheizung beim Beheizen der Fahrgastzelle unterstützen können, indem eine durch die Luftzufuhrkanäle geleitete Luft die Heizvorrichtung in geeigneter Weise durchströmt. Um hierbei zu gewährleisten, dass die durch die Luftzufuhrkanäle geleitete Luft möglichst effektiv durch ein Wärmeübertragernetz der Heizvorrichtung hindurch strömt, wird darauf geachtet, dass sonstige Luftdurchlässe an der Heizvorrichtung gut verschlossen sind. Diesbezüglich oftmals problematische Bereiche sind an Kabeldurchführungen in einem Gehäuse der Heizvorrichtung zu finden.

Insbesondere wenn mehrere Kabel durch eine einzige Kabeldurchführung durchgeführt werden, kann eine ausreichende Dichtigkeit oftmals nur erzielt werden, wenn die Kabeldurchführung bei durchgeführten Kabeln zusätzlich mit geeignetem Dichtschaum versiegelt wird. Dies führt jedoch bei der Herstellung zu weiteren Kosten und ist somit ungünstig. Zudem besteht immer die Gefahr, dass der Dichtschaum mit der Zeit porös wird, da der verwendete Dichtschaum durch Aufheizen und Abkühlen der gesamten Heizvorrichtung häufigen Temperaturwechseln ausgesetzt ist.

Bei einer weiteren elektrischen Heizvorrichtung, welche als Stand der Technik insbesondere in der Offenlegungsschrift EP 1 580 495 A1 beschrieben ist, werden elektrische Anschlusskabel einzeln jeweils durch ein Durchgangsloch in ein Gehäuse der elektrischen Heizvorrichtung geführt. Die dort beschriebenen Durchgangslöcher sind mit Anlageflächen für das jeweilige elektrische Anschlusskabel versehen, wobei die Anlageflächen eine Tiefe in Durchführrichtung des jeweiligen Anschlusskabels aufweisen, welche größer ist als die Dicke der Gehäusewand, in welcher die Durchgangslöcher vorgesehen sind. Dadurch, dass das Anschlusskabel sich an die Anlageflächen der Durchgangslöcher anschmiegen kann, kann ebenfalls eine gewisse Luftdichtigkeit erzielt werden.

Es ist Aufgabe vorliegender Erfindung gattungsgemäße Heizvorrichtungen insbesondere dahingehend weiter zu entwickeln, dass die der Heizvorrichtung zum Aufheizen zugeführte Luft effektiver, insbesondere auch dauerhaft, genutzt werden kann.

Die Aufgabe der Erfindung wird von einer Vorrichtung zum Heizen insbesondere einer Fahrgastzelle eines Kraftfahrzeuges mit einer elektrischen Heizeinrichtung und mit einem Gehäuse gelöst, bei welcher das Gehäuse eine Durchführungsöffnung aufweist, durch welche ein elektrisches Anschlusskabel von einer Gehäuseaußenseite in eine Gehäuseinnenseite hinein geführt werden kann, wobei sich die Heizvorrichtung dadurch auszeichnet, dass die Durchführungsöffnung Mittel zum Reduzieren des Durchmessers der Durchführungsöffnung umfasst.

Die erfindungsgemäßen Mittel zum Reduzieren, nachfolgend auch kurz Reduziermittel genannt, ermöglichen es vorteilhafter Weise, den Durchmesser der Durchführungsöffnung insbesondere hinsichtlich des elektrischen Anschlusskabels derart zu reduzieren, dass das elektrische Anschlusskabel an bzw. in der Durchführungsöffnung derart eingeklemmt ist, dass es sich einerseits besonders dicht an einem Anlagebereich der Durchführungsöffnung anschmiegen kann. Hierdurch kann die Durchführungsöffnung selbst bei hohen Luftdrücken besonders gut abgedichtet sein. Andererseits ist das elektrische Anschlusskabel mittels der Reduziermittel derart fest in der Durchführungsöffnung eingeklemmt, dass die Gefahr einer Relativbewegung des elektrischen Anschlusskabels gegenüber dem Gehäuse der Heizvorrichtung stark verringert ist.

Mit dem Begriff "Durchmesser der Durchführungsöffnung" ist der Innendurchmesser der Durchführungsöffnung gemeint, der im Wesentlichen von Anlagebereichen der Durchführungsöffnung gebildet ist. Der Innendurchmesser entspricht vorzugsweise in etwa einem Außendurchmesser eines elektrischen Anschlusskabels, so dass sowohl der Innendurchmesser der Durchführungsöffnung als auch der Außendurchmesser des elektrischen Anschlusskabels derart gut aufeinander abgestimmt sind, dass eine Montage der vorliegenden Heizvorrichtung wesentlich erleichtert ist. Dies trifft besonders dann zu, wenn eine Trennfuge des Gehäuses der vorliegenden Heizvorrichtung im Bereich der Durchführungsöffnung liegt, so dass eine Hülle bzw. ein Anlagebereich der Durchführungsöffnung baulich besonders einfach von einer ersten Gehäusehälfte und von wenigstens einer weiteren Gehäusehälfte gebildet sein kann. Insbesondere wenn an einer zweigeteilten Gehäusewand mehrere Anschlusskabel durch entsprechend vorhandene Durchführungsöffnungen durchgeführt sind, ist das Zusammenfügen von Gehäusehälften des Gehäuses und damit ein Einklemmen der Anschlusskabel wesentlich leichter durchführbar, da die einzelnen Anschlusskabel weniger stark zusammen gepresst und damit weniger Anpresskräfte aufgebracht werden müssen.

Vorliegend kann als Heizvorrichtung jeglicher Wärmeübertrager in Betracht gezogen werden, mittels welchem Luft erwärmt werden kann, die insbesondere zum Beheizen einer Fahrgastzelle verwendet wird. Insofern bezieht sich die vorliegende Heizvorrichtung im Speziellen auf Heizvorrichtungen, weiche im Bereich des Kraftfahrzeugwesens in Kraftfahrzeugen eingesetzt werden.

Als elektrische Heizeinrichtung kann vorliegend nahezu jegliche Heizquelle eingesetzt werden, mittels welcher elektrische Energie in Wärmeenergie umgewandelt werden kann, wobei die Wärmeenergie in erster Linie zum Beheizen einer Fahrgastzelle einsetzbar sein sollte. Insbesondere eignen sich hierbei elektrische Heizeinrichtungen mit PTC-Elementen, die es konstruktiv einfach ermöglichen, eine gewünschte Heiztemperatur in etwa konstant zu halten. Da derartige PTC-Elemente auch im Bereich von Kraftfahrzeugheizungen gut bekannt sind, wird auf deren Aufbau und Funktionsweise vorliegend nicht weiter eingegangen.

Der Begriff "elektrisches Anschlusskabel" umschreibt vorliegend jegliche elektrische Anschlüsse, mittels welchen eine Versorgung der elektrischen Heizeinrichtung mit Elektrizität betriebssicher gewährleistet werden kann. Hierbei kann das elektrische Anschlusskabel beispielsweise aus einem isolierten Einzeldraht oder aus einer isolierten Litze mit einer Vielzahl an Drähten bestehen. Vorteilhafter Weise weist das elektrische Anschlusskabel eine einzige Außenhülle auf, mittels welcher ein inniger und guter Kontakt zwischen dem elektrischen Anschlusskabel und dem Anlagebereich der Durchführungsöffnung hergestellt werden kann.

Um einen Kontakt zwischen einer Wandung des Gehäuses bzw. einer Wandung der Durchführungsöffnung und dem elektrischen Anschlusskabel besonders innig gestalten zu können, ist es vorteilhaft, wenn die Durchführungsöffnung Anlagebereiche aufweist, an welchen das elektrische Anschlusskabel anliegen kann. Vorzugsweise sind diese Anlagebereiche in Durchführungsrichtung der elektrischen Anschlusskabel länger ausgebildet als eine Dicke der Gehäusewandung an dieser Durchführungsöffnung. Darüber hinaus verfügen die Anlagebereiche idealerweise über konkav ausgebildete Anlageflächen, die einem in die Durchführungsöffnung eingelegten elektrischen Anschlusskabel zugewandt sind, so dass die Anlagebereiche insbesondere mit in etwa rund ausgebildeten elektrischen Anschlusskabeln besonders gut in Kontakt treten können. Es versteht sich, dass bei elektrischen Anschlusskabeln mit anderen Querschnitten die Anlagebereiche entsprechend vorteilhaft ausgebildet sein können. Darüber hinaus ist es vorteilhaft, wenn ein erster Anlagebereich einer Durchführungsöffnung an einer ersten Gehäusehälfte und ein weiterer Anlagebereich der Durchführungsöffnung an einer weiteren Gehäusehälfte angeordnet sind. Hierdurch kann eine Montage des elektrischen Anschlusskabels wesentlich erleichtert werden.

Die vorliegenden Reduziermittel können ebenfalls vielfältiger Gestalt sein. Beispielsweise sind sie ein fester Bestandteil einer oder mehrerer Gehäusehälften, oder sie sind im Bereich der Durchführungsöffnung lösbar an dem Gehäuse der Heizvorrichtung befestigt.

Eine besonders vorteilhafte Ausführungsvariante sieht vor, dass die Reduziermittel Mittel zum luftdichten Abdichten der Durchführungsöffnung umfassen. Vorteilhafter Weise können mittels der Reduziermittel Mittel zum luftdichten Abdichten, nachfolgend auch kurz Abdichtmittel genannt, der Durchführungsöffnung bereit gestellt werden, so dass das Gehäuse der Heizvorrichtung im Bereich der Durchführungsöffnung besonders gut abgedichtet werden kann. Hierdurch kann vorteilhafter Weise weiter die Gefahr reduziert werden, dass insbesondere zu erwärmende Luft nicht vollständig durch ein Wärmeübertragernetz der Heizvorrichtung geleitet wird. Insofern kann die Effektivität einer gattungsgemäßen Heizvorrichtung mit derartigen Abdichtmitteln erhöht werden.

Um im Bereich der Durchführungsöffnung zwischen einer Gehäusewand bzw. einem Anlagebereich oder einer konkav ausgebildeten Anlagefläche und einem elektrischen Anschlusskabel eine besonders gute Abdichtung gewährleisten zu können, ist es vorteilhaft, wenn die Abdichtmittel eine linienförmige Kontaktkante aufweisen. Diese linienförmige Kontaktkante kann sich besonders gut in ein Isoliermaterial des elektrischen Anschlusskabels eindrücken, so dass die Durchführungsöffnung in diesem Kontaktbereich besonders dicht gestaltet sein kann. Beispielsweise sind derartige Abdichtmittel baulich besonders einfach mittels eines umlaufenden Stegs oder mehrere umlaufender Stege gebildet, der bzw. die vorzugsweise eine Stegdicke aufweist bzw. aufweisen, welche geringer ist als die Länge eines Anlagebereiches bzw. einer Anlagefläche in Durchführungsrichtung eines elektrischen Anschlusskabels. Vorzugsweise sind eine erste Steghälfte an der ersten Gehäusehälfte und eine weitere Steghälfte an der weiteren Gehäusehälfte vorgesehen, so dass das elektrische Anschlusskabel besonders gut zwischen diesen beiden Steghälften eingeklemmt werden kann.

Da die Abdichtmittel für sich allein gattungsgemäße Heizvorrichtungen bereits vorteilhaft weiter bilden können, sind die Merkmale im Zusammenhang mit den vorliegenden Abdichtmitteln auch ohne die übrigen Merkmale der Erfindung vorteilhaft.

Eine weitere bevorzugte Ausführungsvariante sieht vor, dass die Reduziermittel Mittel zum Halten des elektrischen Anschlusskabels umfassen. Besonders vorteilhaft ist es, wenn die Reduziermittel kumulativ oder alternativ auch Mittel zum Halten, nachfolgend auch kurz Haltemittel, der elektrischen Anschlusskabel realisieren können. Durch die vorliegenden Haltemittel kann insbesondere die Gefahr verringert werden, dass sich das elektrische Anschlusskabel unbeabsichtigt gegenüber einer Gehäusewand bzw. einem Anlagebereich oder einer konkav ausgebildeten Anlagefläche bewegen kann, wodurch es in diesem Kontaktbereich zu Undichtigkeiten kommen könnte. Die Haltemittel können eine solche Relativbewegung des elektrischen Anschlusskabels vorteilhafter Weise zusätzlich verhindern.

Es versteht sich, dass die Haltemittel unterschiedlich gestaltet sein können, um ihre Funktion erfüllen zu können. Eine diesbezüglich besonders vorteilhafte Ausführungsvariante sieht vor, dass die Haltemittel eine Kontaktspitze umfassen. Mittels der Kontaktspitze können die Haltemittel besonders sicher in eine Isolierung des elektrischen Anschlusskabels eingreifen bzw. gegebenenfalls auch eindringen.

Eine solche Kontaktspitze lässt sich baulich sehr einfach und vorteilhaft realisieren, wenn die Haltemittel einen kegelförmig oder pyramidenförmig ausgebildeten Körper aufweisen. Insbesondere kann mit derart ausgestalteten Körpern die Gefahr verringert werden, dass die Haltemittel zu tief in die Isolierung des elektrischen Anschlusskabels eindringen und hierbei die Isolierung beschädigen können.

Sind die Abdichtmittel und/oder die Haltemittel der Durchführungsöffnung an einem der Gehäuseinnenseite zugewandten Bereich und/oder innerhalb eines Anlagebereichs der Durchführungsöffnung angeordnet, ist das elektrische Anschlusskabel gegenüber einer Gehäuseaußenseite nicht zu starr eingeklemmt, so dass das elektrische Anschlusskabel im Bereich der Gehäuseaußenseite noch besonders gut bewegt und somit in unterschiedliche Richtungen ausgerichtet werden kann.

Die Abdicht- und/oder Haltemittel können in besonders intensiven Kontakt mit dem elektrischen Anschlusskabel treten, wenn die Abdichtmittel und/oder die Haltemittel der Durchführungsöffnung über eine Anlagefläche eines Anlagebereichs der Durchführungsöffnung radial hinaus reichen. Wie auch eingangs beschrieben, kann der Innendurchmesser der Durchführungsöffnung mittels der Anlagefläche bzw. des Anlagebereichs vorgegeben sein. Reichen die Abdichtmittel bzw. die Haltemittel über die Anlagefläche bzw. den Anlagebereich radial hinaus, kann der vorgegebene Durchmesser der Durchführungsöffnung baulich einfach reduziert werden.

In diesem Zusammenhang sieht eine weitere vorteilhafte Ausführungsvariante vor, dass die Abdichtmittel und/oder die Haltemittel der Durchführungsöffnung in die Durchführungsöffnung radial hinein ragen. Insbesondere hierdurch können die Abdichtmittel und/oder die Haltemittel mit dem elektrischen Anschlusskabel besonders intensiv kommunizieren.

Sind die Abdichtmittel und/oder die Haltemittel der Durchführungsöffnung an einem einem Anlagebereich abgewandten Ende schmaler ausgebildet als an einem dem Anlagebereich zugewandten Ende, können die Abdichtmittel bzw. die Haltemittel sich besonders gut mit dem elektrischen Anschlusskabel im Eingriff befinden.

Steht ein Anlagebereich der Durchführungsöffnung über eine Gehäusewandung axial hervor, kann die Durchführungsöffnung in Durchführungsrichtung baulich einfach verlängert werden, so dass das elektrische Anschlusskabel wesentlich besser geführt werden kann. Erstreckt sich eine derartig axiale Verlängerung der Durchführungsöffnung insbesondere in die Gehäuseinnenseite hinein, kann der Anlagebereich vorteilhaft vergrößert werden, ohne hierbei ein äußerliches Baumaß der der Heizvorrichtung vergrößern zu müssen.

Weitere Vorteile, Ziele und Eigenschaften vorliegender Erfindung werden anhand nachfolgender Beschreibung anliegender Zeichnung erläutert, in welcher beispielhaft ein Gehäuse einer elektrischen Heizvorrichtung mit Durchführungsöffnungen und mit elektrischen Anschlusskabeln dargestellt ist.

Es zeigt
- Figur 1: schematisch eine perspektivische Ansicht eines zweiteiligen Gehäuses einer elektrischen Heizvorrichtung mit einem zweigeteilten Gehäuseanschlussterminal für elektrische Anschlusskabel,
- Figur 2: schematisch eine Detailansicht des zweigeteilten Gehäuseanschlussterminals im Bereich von Durchführungsöffnungen für die elektrischen Anschlusskabel der elektrischen Heizvorrichtung,
- Figur 3: schematisch eine perspektivische Ansicht einer Unterseite des Gehäuseanschlussterminals und eine perspektivische Ansicht von Anlageflächen der Durchführungsöffnungen mit Mitteln zum Reduzieren der Durchmesser der Durchführungsöffnungen,
- Figur 4: schematisch eine detailansicht der Unterseite des Gehäuseanschlussterminals mit zwei der Anlageflächen aus der Figur 3,
- Figur 5: schematisch eine Detailansicht von Mitteln zum Abdichten insbesondere der linken der beiden Durchführungsöffnungen aus der Figur 4 und eine Detailansicht von Mitteln zum Halten eines in die linke Durchführungsöffnung einlegbaren elektrischen Anschlusskabels, und
- Figur 6: schematisch einen Längsschnitt der linken Durchführungsöffnung aus den Figuren 4 und 5 mit einem eingelegten elektrischen Anschlusskabel.

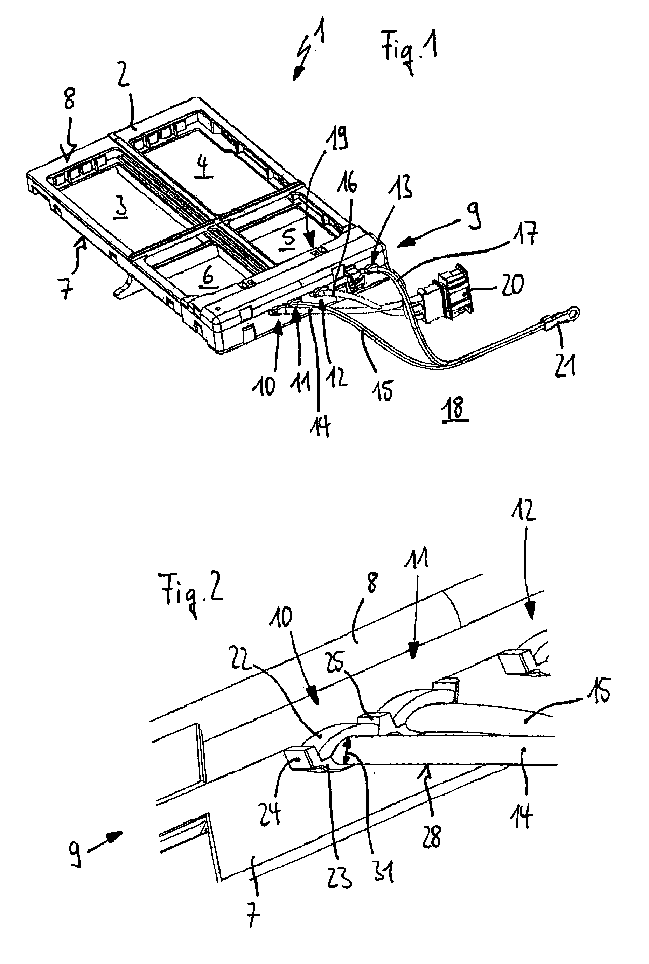

Die in der Figur 1 gezeigte elektrische Heizvorrichtung 1 wird im ordnungsgemäßen Betriebszustand in ein Heizungssystem (hier nicht gezeigt) eines Kraftfahrzeuges eingebaut, um das Heizungssystem beim Beheizen einer Fahrgastzelle des Kraftfahrzeuges unterstützen zu können.

Die elektrische Heizvorrichtung 1 weist ein Gehäuse 2 auf, welches insgesamt vier Befestigungsplätze 3, 4, 5 und 6 für hier nicht gezeigte elektrische Heizeinrichtungen umfasst. Insbesondere die elektrischen Heizeinrichtungen stellen ein Wärmeübertragernetz der elektrischen Heizvorrichtung 1 aus Heizrippen bereit, welche mittels PTC-Heizelemente der elektrischen Heizeinrichtungen erhitzt werden können, so dass eine das Wärmeübertragernetz durchströmende Luft erwärmt werden kann. Die so erwärmte Luft kann dann zur Fahrgastzelle des Kraftfahrzeuges weiter geleitet werden, wodurch sich die Fahrgastzelle ausschließlich oder zusätzlich erwärmen lässt.

Damit die elektrischen Heizeinrichtungen besonders einfach in die jeweiligen Befestigungsplätze 3, 4, 5 bzw. 6 eingelegt werden können, ist das vorliegende Gehäuse 2 vorteilhafter Weise zweigeteilt gestaltet und weist zumindest eine Gehäuseunterseite 7 und eine Gehäuseoberseite 8 auf.

Um die elektrischen Heizeinrichtungen betriebssicher mit elektrischer Energie versorgen zu können, befinden sich an einem Gehäuseanschlussterminal 9 des Gehäuses 2 mehrere Durchführungsöffnungen 10, 11, 12 und 13, durch welche hindurch jeweils ein einziges elektrisches Anschlusskabel 14, 15, 16 und 17 hindurch von einer Gehäuseaußenseite 18 in eine Gehäuseinnenseite 19 geführt werden können. Das Gehäuseanschlussterminal 9 ist hierbei entsprechend der Gehäuseunterseite 7 und der Gehäuseoberseite 8 gemeinsam mit dem Gehäuse 2 zweigeteilt ausgebildet.

Des Weiteren sind die beiden elektrischen Anschlusskabel 14 und 16 einem elektrischen Netzstecker 20 zugehörig, wohin gegen die beiden Anschlusskabel 15 und 17 einem Masseanschluss 21 zuzuordnen sind.

Nach der Darstellung der Figur 2 sind insbesondere die beiden Durchführungsöffnungen 10 und 11 vergrößert dargestellt. Der besseren Übersichtigkeit halber wird der detailierte Aufbau aller Durchführungsöffnungen 10, 11, 12 und 13 nachfolgend lediglich am Beispiel der linken Durchführungsöffnung 10 beschrieben. Alle übrigen Durchführungsöffnungen 11, 12 und 13 sind entsprechend identisch gestaltet. Da bei diesem Ausführungsbeispiel alle Durchführungsöffnungen 10 bis 13 identisch gestaltet sind, können Bezugsziffern hinsichtlich der Erläuterung zu der Durchführungsöffnung 10 der besseren Übersichtigkeit halber auch an einer der übrigen Durchführungsöffnungen 11, 12 und 13 eingezeichnet sein.

An der Gehäuseoberseite 8 ist eine erste axiale Verlängerungsschale 22 der Durchführungsöffnung 10 und an der Gehäuseunterseite 7 ist entsprechend eine weitere axiale Verlängerungsschale 23 der Durchführungsöffnung 10 vorgesehen. Die beiden axialen Verlängerungsschalen 22 und 23 sind bei ordnungsgemäß aufeinander gesetzten Gehäusehälften 7 und 8 sich direkt gegenüber liegend angeordnet, wobei die erste axiale Verlängerungsschale 22 seitlich von seitlichen Nasen 24 und 25 der zweiten axialen Verlängerungsschale 23 stabilisiert ist.

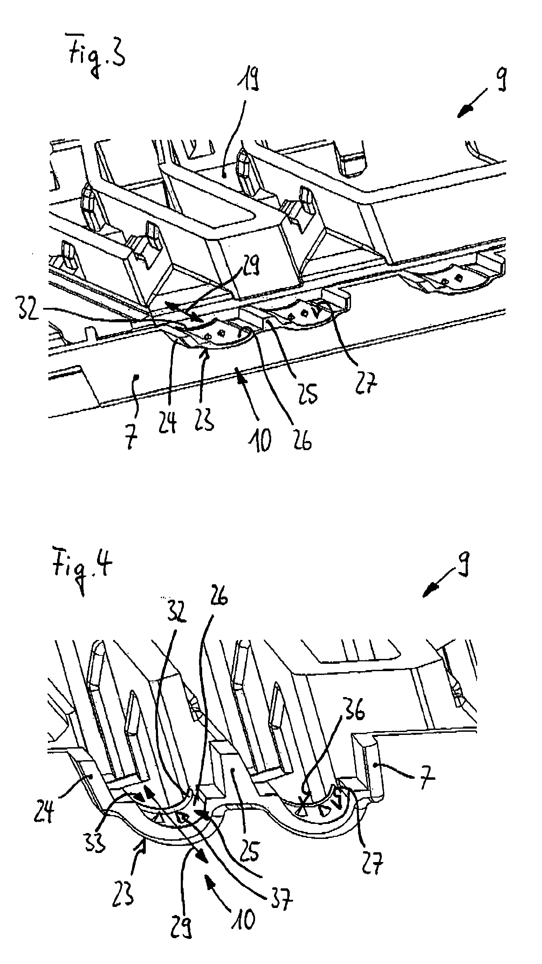

Bei allen weiteren Darstellungen nach den Figuren 3, 4, 5 und 6 ist die Gehäuseunterseite 7 des Gehäuses 2 im Bereich des Gehäuseanschlussterminals 9 noch detailierter gezeigt, wobei insbesondere die Durchführungsöffnung 10 mit ihrem unteren Anlagebereich 26 gut einsehbar gezeigt ist.

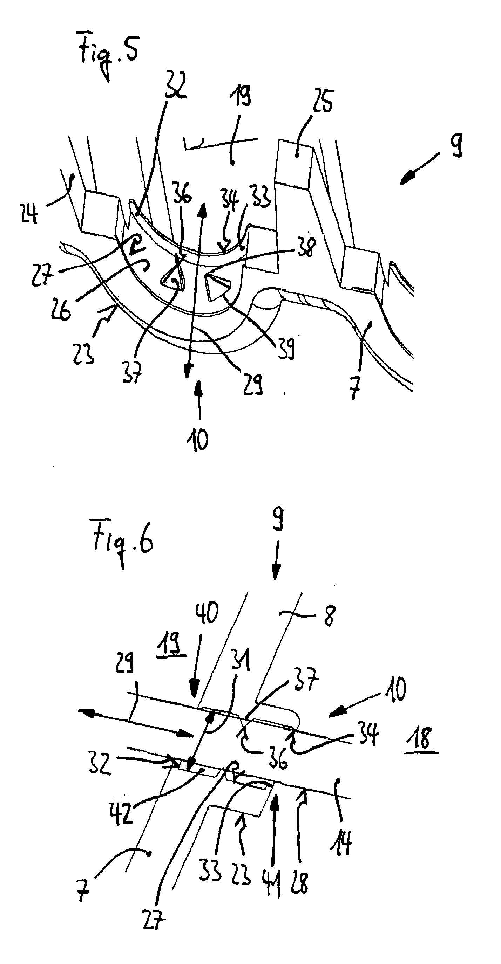

Der untere Anlagebereich 26 ist als konkav gewölbte Anlagefläche 27 ausgebildet, so dass sich die ovale Isolierung 28 des elektrischen Anschlusskabels 14 (siehe auch Figur 6) besonders gut an die konkave Anlagefläche 27 bzw. an den Anlagebereich 26 anschmiegen kann. Einen bereits guten Halt findet das elektrische Anschlusskabel 14 innerhalb der Durchführungsöffnung 10 auf Grund der Tatsache, dass der Anlagebereich 26 bzw. die Anlagefläche 27 in Durchführungsrichtung 29 des elektrischen Anschlusskabels 14 mittels der axialen Verlängerungsschale 23 verlängert bzw, vergrößert sind. Auch eine gute Abdichtung kann hierdurch zwischen dem elektrischen Anschlusskabel 14 und dem Anlagebereich 26 an der Durchführungsöffnung 10 erzielt werden.

Sowohl das Abdichten als auch das Halten sind vorliegend weiter wesentlich verbessert, da an der Durchführungsöffnung 10 Mittel 30 zum Reduzieren eines Durchmessers 31 (siehe Figur 2) der Durchführungsöffnung 10 an dieser Durchführungsöffnung 10 vorgesehen sind. Der Durchmesser 31 der Durchführungsöffnung 10 ist durch den Abstand des unteren Anlagebereichs 26 der weiteren axialen Verlängerungsschale 23 zu einem oberen Anlagebereich (hier nicht eingezeichnet) der ersten axialen Verlängerungsschale 22 definiert. Der Durchmesser 31 kann vorliegend also insbesondere als maximaler Innendurchmesser einer der Durchführungsöffnungen 10 bis 13 angesehen werden.

Als erste Reduziermittel 30 weist die Durchführungsöffnung 10 Mittel 32 zum luftdichten Abdichten der Durchführungsöffnung 10 auf. Die Abdichtmittel 32 sind hierbei als gebogener Steg 33, welcher der Krümmung der konkaven Anlagefläche folgt, mit einer linearen Kontaktkante 34 ausgebildet, so dass sie besonders gut in die Isolierung 28 des elektrischen Anschlusskabels 14 eingedrückt werden können. Hierdurch dichten die Abdichtmittel 32 die Durchführungsöffnung 10 besonders gut ab, so dass die Gefahr einer Luftleckage an der Durchführungsöffnung 10 wesentlich verringert ist. Vorliegend sind die Abdichtmittel 32 der Durchführungsöffnung 10 an einem der Gehäuseinnenseite 19 zugewandten Bereich angeordnet.

Kumulativ zu den Abdichtmitteln 32 sind an der Durchführungsöffnung 10 als weitere Reduziermittel 30 zusätzlich Mittel 35 zum Halten des elektrischen Anschlusskabels 14 vorgesehen. Die Haltemittel 35 weisen eine Kontaktspitze 36 auf und sind mit einem pyramidenförmigen Körper 37 ausgestattet. Mittels der Kontaktspitze 36 kann der pyramidenförmige Körper 37 das elektrische Anschlusskabel 14 besonders gut halten, so dass eine unerwünschte Relativbewegung in Durchführungsrichtung 29 zwischen dem elektrischen Anschlusskabel 14 und der Durchführungsöffnung 10 unterbunden werden kann. Hierdurch ist die Gefahr einer Leckage im Bereich der Durchführungsöffnung 10 nochmals verringert. Die Haltemittel 35 der Durchführungsöffnung 10 sind bei diesem Ausführungsbeispiel innerhalb des Anlagebereichs 26 der Durchführungsöffnung 10 angeordnet.

Sowohl die Abdichtmittel 32 als auch die Haltemittel 35 reichen über die Anlagefläche 27 hinaus, so dass beiden Mittel 32 und 35 den Durchmesser 31 der Durchführungsöffnung 10 vorteilhaft reduzieren. Insbesondere die Haltemittel 35 ragen zudem noch in die Durchführungsöffnung 10 radial hinein und sind an einem dem Anlagebereich 26 abgewandten Ende 38 schmaler ausgebildet als einem dem Anlagebereich 26 zugewandten Ende 39.

Bei der in der Figur 6 in einem Längsschnitt gezeigten Durchführungsöffnung 10 ist gut erkennbar, wie das elektrische Anschlusskabel 14 im Bereich des Gehäuseanschlussterminals 9 von der Gehäuseunterseite 7 und der Gehäuseoberseite 8 umgeben sein kann. Das elektrische Anschlusskabel 14 wird somit sowohl an der Gehäuseunterseite 7 als auch an der Gehäuseoberseite 8 mittels der pyramidenförmig ausgebildeten Kontaktspitzen 36 erfasst, indem die Kontaktspitzen 36 in die Isolierung 28 des elektrischen Anschlusskabels 14 eindringen können. Darüber hinaus sind in Bereichen 40 und 41 an der Gehäuseinnenseite 19 bzw. an der Gehäuseaußenseite 18 jeweils Mittel 32 zum Abdichten der Durchführungsöffnung 10 vorgesehen, die jeweils sowohl an der Gehäuseunterseite 7 als auch an der Gehäuseoberseite 8 durch entsprechend gebogene Stege 33 mit linearen Kontaktkanten 34 gebildet sind.

Zwischen den Anlageflächen 27 und dem elektrischen Anschlusskabel 14 ist in diesem Ausführungsbeispiel ein Spalt 42 vorhanden, so dass die beiden Gehäusehälften 7 und 8 besonders einfach aufeinander gepresst werden können. Insbesondere ist mittels des Spalts 42 gewährleistet, dass sich sowohl die Mittel 32 zum Abdichten der Durchführungsöffnung 10 als auch die Mittel 35 zum Halten des elektrischen Anschlusskabels 14 gut in die Isolierung 28 des elektrischen Anschlusskabels 14 eindrücken können. Der Übersichtigkeit halber können die einzelnen vorstehend erläuterten Komponenten nur exemplarisch eingezeichnet sein.

## Patentansprüche

1. Vorrichtung (1) zum Heizen insbesondere einer Fahrgastzelle eines Kraftfahrzeuges mit einer elektrischen Heizeinrichtung und mit einem Gehäuse (2), bei welcher das Gehäuse (2) eine Durchführungsöffnung (10, 11, 12, 13) aufweist, durch welche ein elektrisches Anschlusskabel (14, 15, 16, 17) von einer Gehäuseaußenseite (18) in eine Gehäuseinnenseite (19) hinein geführt werden kann, ***dadurch gekennzeichnet, dass*** die Durchführungsöffnung (10, 11, 12, 13) Mittel (30) zum Reduzieren des Durchmessers (31) der Durchführungsöffnung (10, 11, 12, 13) umfasst.

2. Heizvorrichtung (1) nach Anspruch 1, ***dadurch gekennzeichnet, dass*** die Reduziermittel (30) Mittel (32) zum luftdichten Abdichten der Durchführungsöffnung (10, 11, 12, 13) umfassen.

3. Heizvorrichtung (1) nach Anspruch 2, ***dadurch gekennzeichnet, dass*** die Abdichtmittel (32) der Durchführungsöffnung (10, 11, 12, 13) eine linienförmige Kontaktkante (34) aufweisen.

4. Heizvorrichtung (1) nach einem der vorhergehenden Ansprüche, **da*durch gekennzeichnet, dass*** die Reduziermittel (30) Mittel (35) zum Halten des elektrischen Anschlusskabels (14, 15, 16, 17) umfassen.

5. Heizvorrichtung (1) nach Anspruch 4, ***dadurch gekennzeichnet,* dass** die Haltemittel (35) eine Kontaktspitze (36) aufweisen.

6. Heizvorrichtung (1) nach Anspruch 4 oder 5, ***dadurch gekennzeichnet, dass*** die Haltemittel (35) einen kegelförmig oder pyramidenförmig ausgebildeten Körper (37) aufweisen.

7. Heizvorrichtung (1) nach einem der vorhergehenden Ansprüche, ***dadurch gekennzeichnet, dass*** Abdichtmittel (32) und/oder Haltemittel (35) der Durchführungsöffnung (10, 11, 12, 13) an einem der Gehauseinnenseite (19) zugewandten Bereich (40) und/oder innerhalb eines Anlagebereichs (26) der Durchführungsöffnung (10, 11, 12, 13) angeordnet sind.

8. Heizvorrichtung (1) nach einem der vorhergehenden Ansprüche, ***dadurch gekennzeichnet, dass*** Abdichtmittel (32) und/oder Haltemittel (35) der Durchführungsöffnung (10, 11, 12, 13) über eine Anlagefläche (27) eines Anlagebereichs (26) der Durchführungsöffnung (10, 11, 12, 13) radial hinaus reichen.

9. Heizvorrichtung (1) nach einem der vorhergehenden Ansprüche, **da*durch gekennzeichnet, dass*** Abdichtmittel (32) und/oder Haltemittel (35) der Durchführungsöffnung (10, 11, 12, 13) in die Durchführungsöffnung (10, 11, 12, 13) radial hinein ragen.

10. Heizvorrichtung (1) nach einem der vorhergehenden Ansprüche, **da*durch gekennzeichnet, dass*** Abdichtmittel (32) und/oder Haltemittel (35) der Durchführungsöffnung (10, 11, 12, 13) an einem einem Anlagebereich (26) abgewandten Ende (38) schmaler ausgebildet sind als an einem dem Anlagebereich (26) zugewandten Ende (39).
